# FASCICULE DE BREVET EUROPEEN

(11) **EP 3 300 490 B1**
(45) Date de publication et mention de la délivrance du brevet: **13.11.2019**
(21) Numéro de dépôt: 16722266.0
(22) Date de dépôt: 22.03.2016
(51) Int. Cl.: B62B 5/02

(54) **DISPOSITIF POUR ÉLEVER MANUELLEMENT UNE CHARGE AVEC UN LEVIER POUR CHARIOT, VALISE ET ANALOGUE**
VORRICHTUNG ZUM MANUELLEN ANHEBEN EINER LAST MIT EINEM HEBEL FÜR EINEN WAGEN, EINEN KOFFER UND DERGLEICHEN
DEVICE FOR MANUALLY LIFTING A LOAD WITH A LEVER FOR A CART, SUITCASE AND THE LIKE

(30) Priorité: 25.03.2015 FR 1500592
(43) Date de publication de la demande: 04.04.2018
(73) Titulaire: Muscocea, Anghel, 94220 Charenton le Pont (FR)
(72) Inventeur: Muscocea, Anghel, 94220 Charenton le Pont (FR)
(86) Numéro de dépôt international: PCT/FR2016/000055
(87) Numéro de publication internationale: WO 2016/151206

(56) Documents cités:
- DE-A1-102007 014 159
- US-A- 878 546
- US-A- 4 722 538

## Description

Dispositif pour élever manuellement une charge avec un levier pour chariot, valise et analogue.

La présente invention est relative à un dispositif pour élever manuellement une charge avec un levier destiné à être utiliser pour un chariot, une valise et analogues. Document DE102007014159A1 décrit un dispositif pour élever manuellement une charge avec un levier pour chariot, valise et analogues, facilitant la montée et la descente d'escaliers et divers obstacles.

L'expérience ayant démontrée qu'un usager rencontre actuellement des difficultés en montant et en descendant les escaliers et divers obstacles avec un chariot ou valise.

Le dispositif de l'invention, qui remédie à ces inconvénients, est remarquable en ce que l'effort manuel entreprit par l'usager, va être réduit considérablement pour la montée et la descente d'escalier et divers obstacles.

La présente invention sera décrite en détail comprise par la suite fait en se référant aux dessins annexés à titre d'exemple seulement, sur laquelle :
- la figure 1 est une vue latérale du dispositif conforme à l'invention, montrant l'affrontement de diverses marches à angles apparents.
- la figure 2 est une vue latérale du dispositif conforme à l'invention.

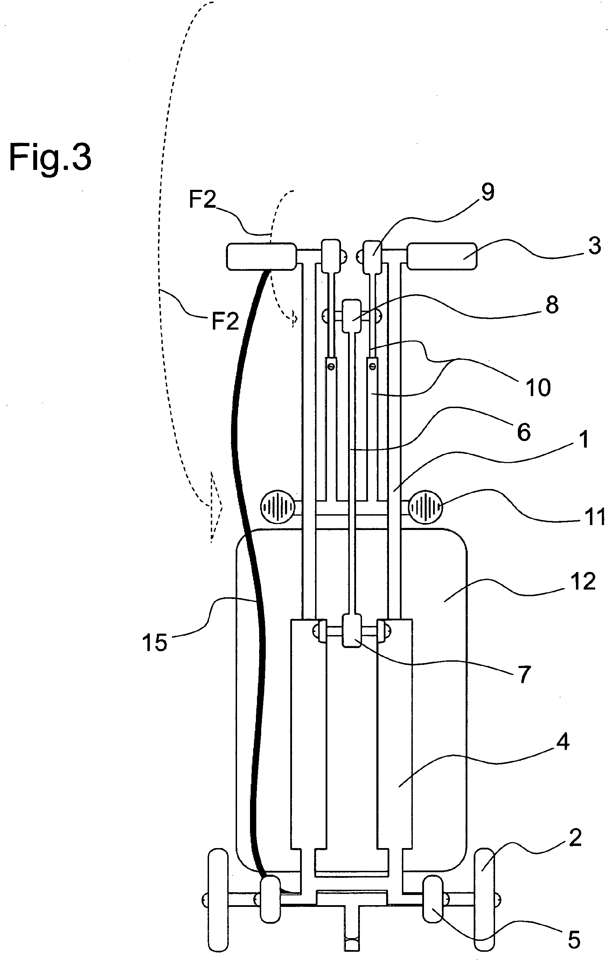

- la figure 3 est une vue de face du dispositif conforme à l'invention.

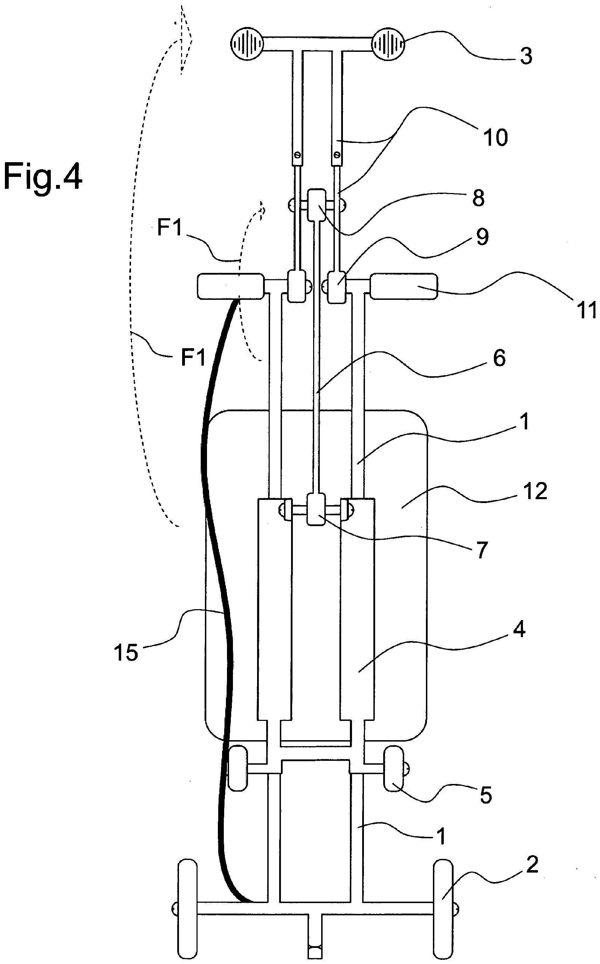

- la figure 4 est une vue de face du dispositif conforme à l'invention.
- la figure 5 est une vue de face du dispositif conforme à l'invention avec la charge plus volumineuse.
- la figure 6 est une vue latérale du dispositif conforme à l'invention, avec la charge plus volumineuse, montrant des détails de la réalisation.

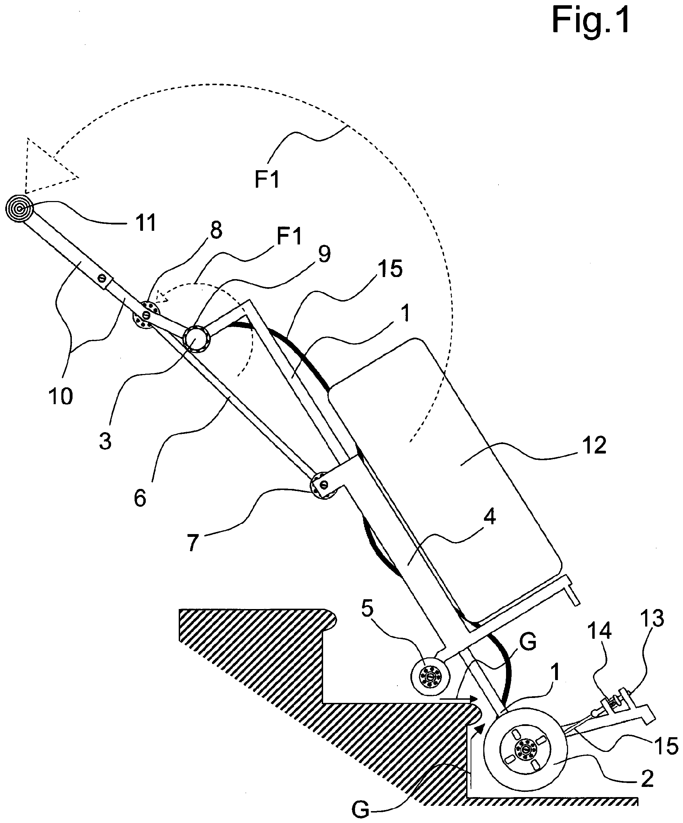

En se reportant à la figure 1, celle-ci montre que le dispositif comporte deux parties :
- une première partie comportant : un cadre 1 solidaire avec des roues 2, les roues 2 et des poignées 3 qui sont fixées sur le cadre 1,
- une deuxième partie comportant : un support de charge 4 solidaire avec des roues 5, les roues 5 et une charge 12 qui est montée de manière fixe sur le support de charge 4,

La deuxième partie étant coulissante par rapport à la première partie par l'action d'un bras de levier télescopique 10. L'action de monter une marche d'escalier avec le dispositif selon l'invention est réalisée en deux phases de la façon suivante :
- pendant la première phase, en tournant le bras de levier télescopique 10 vers le haut à partir d'une position initiale basse, suivant un mouvement circulaire selon la flèche F1, la deuxième partie coulisse par rapport à la première partie vers le haut et monte une marche d'escalier,
- et ensuite pendant la deuxième phase, en tournant le bras de levier télescopique 10 vers le bas, suivant un mouvement circulaire selon la flèche F2, jusqu'à la position initiale basse dudit bras de levier télescopique, la première partie monte à son tour la même marche d'escalier.

Le bras de levier télescopique 10 étant fixé sur les poignées3avec une articulation 9. Une deuxième articulation 8 relie le bras de levier télescopique 10 avec une transmission 6, qui est reliée à son tour, avec une troisième articulation 7, au support de charge 4 de la deuxième partie.

La figure 1 montre que pendant la phase 2, en tournant le bras de levier télescopique 10 vers le bas selon la flèche F, jusqu'à sa position initiale basse, les roues 5 déplacent la deuxième partie selon un mouvement de translation selon la flèche G, pour que la première partie réussit à aborder un angle apparent sur le bord de la marche pour faciliter la montée de la première partie.

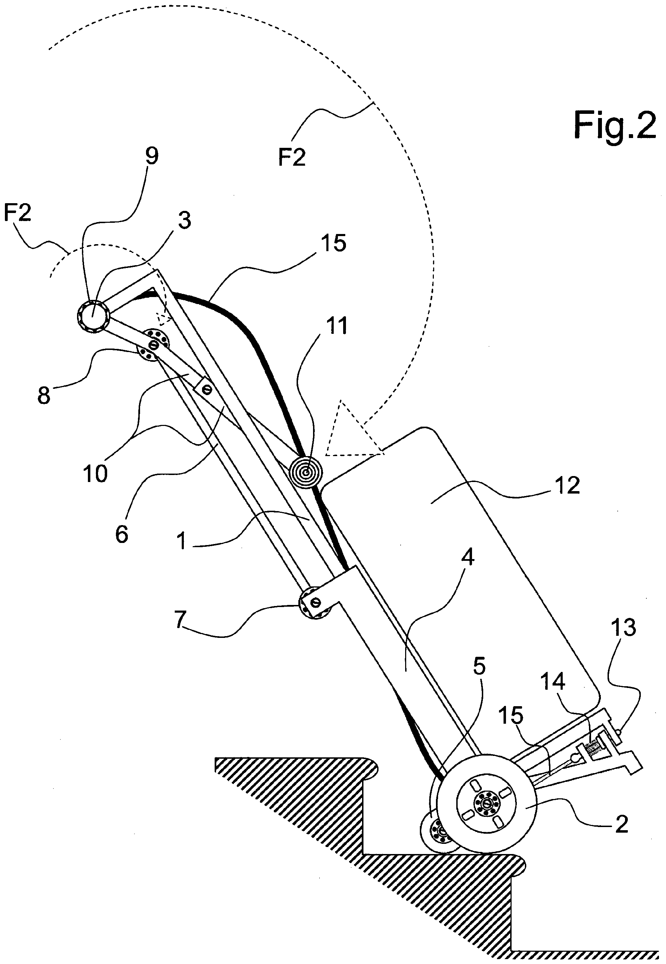

En se reportant à la figure 2, celle-ci montre que le dispositif comporte une goupille 13 avec un ressort 14 bloquant les deux parties, permettant au dispositif de se déplacer avec ses quatre roues 2 et 5 sur une surface plane.

En se reportant à nouveau sur la figure 1, on remarque que la goupille 13 est débloquée avec un câble 15.

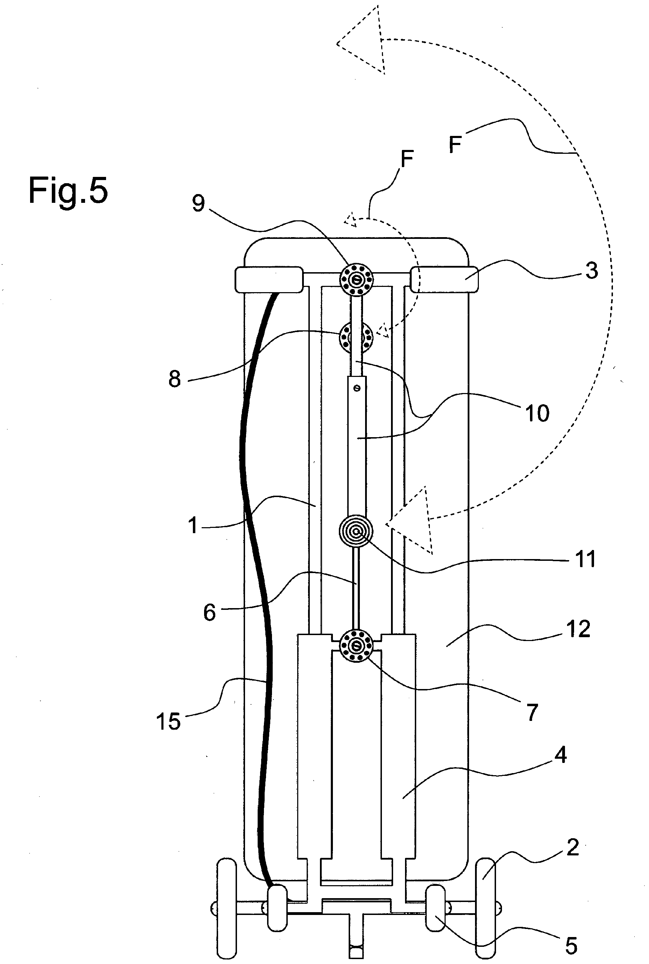

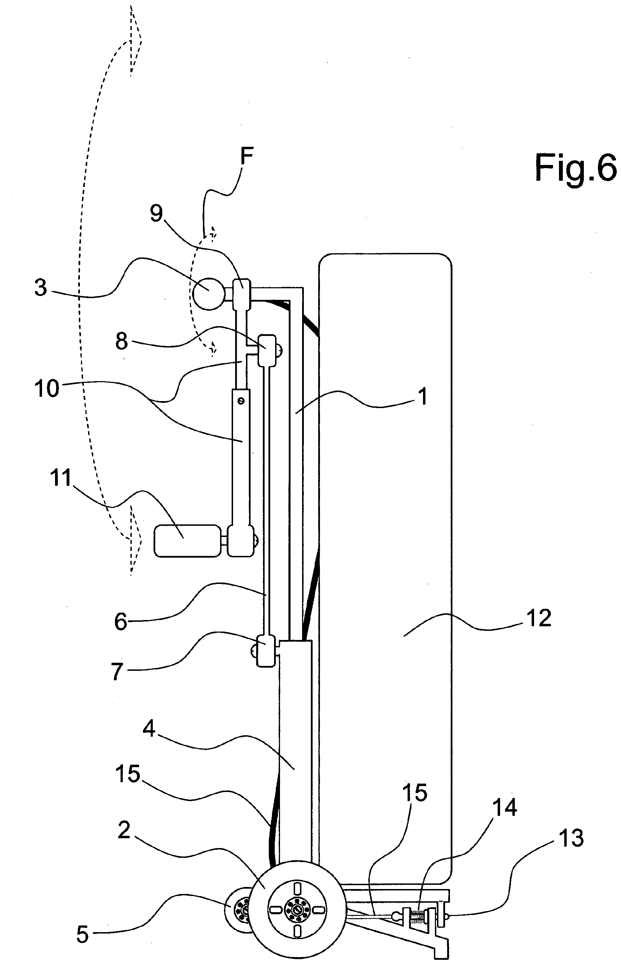

En se reportant aux figures 5 et 6, on remarque que le bras télescopique 10 est fixé sur le cadre 1 d'une manière parallèle avec une charge amovible 12 qui est plus volumineuse, permettant au bras de levier télescopique 10 d'être tourné vers le haut et vers le bas suivant un mouvement circulaire selon la flèche F, sans être gêné par la charge amovible 12.

La poignée rotative 11, aide l'usager à manipuler le bras de levier télescopique 10 selon la flèche F, comme c'est visible sur toutes les figures.

## Revendications

1. Dispositif pour élever manuellement une charge avec un levier pour chariot, valise et analogues, facilitant la montée et la descente d'escaliers et divers obstacles, le dispositif comporte une première partie comportant un cadre (1) solidaire avec des roues (2), les roues (2) et des poignées (3) sont fixées sur le cadre (1), **caractérisée en ce qu'**il comporte
- une deuxième partie comportant: un support de charge (4) solidaire avec des roues (5), les roues (5) et une charge (12) sont montées de manière fixe sur le support de charge (4), la deuxième partie étant coulissante par rapport à la première partie par l'action d'un bras de levier télescopique (10) pour monter une marche d'escalier en deux phases,
le bras de levier télescopique (10) étant fixé sur les poignées (3) avec une articulation (9), une deuxième articulation (8) reliant le bras de levier télescopique (10) avec une transmission (6), qui est reliée à son tour avec une troisième articulation (7) au support de charge (4) de la deuxième partie.

2. Dispositif pour élever manuellement une charge avec un levier pour chariot, valise et analogues selon la revendication 1, **caractérisée en ce que** le dispositif comporte une goupille (13) avec un ressort (14) bloquant les deux parties, permettant au dispositif de se déplacer avec ses quatre roues (2 et 5) sur une surface plane.

3. Procédé d'utilisation d'un dispositif pour élever manuellement une charge avec un levier selon l'une quelconque des revendications précédentes **caractérisé en ce qu'**il comprend les deux phases suivantes :
- pendant la première phase, en tournant le bras de levier télescopique (10) vers le haut suivant un mouvement circulaire (F1) à partir d'une position initiale basse, la deuxième partie coulisse par rapport à la première partie vers le haut et monte la marche d'escalier,
- et ensuite pendant la deuxième phase, en tournant le bras de levier télescopique (10) vers le bas suivant un mouvement circulaire (F2), jusqu'à la position initiale basse dudit bras télescopique, la première partie monte à son tour la même marche.

4. Procédé selon la revendication 3 **caractérisé en ce qu'**en tournant le bras de levier télescopique (10) vers le bas (F2), jusqu'à la position initiale basse dudit bras télescopique, pendant la deuxième phase, les roues (5) déplacent la deuxième partie selon un mouvement de translation (G), pour que la première partie réussisse à aborder un angle apparent sur le bord de la marche pour faciliter la montée de la première partie.

## Patentansprüche

1. Vorrichtung zum manuellen Anheben einer Last mit einem Hebel für einen Wagen, einen Koffer und dergleichen, die das Auf- und Absteigen von Treppen und verschiedenen Hindernissen erleichtert, wobei die Vorrichtung einen ersten Teil umfasst, der einen mit Rädern (2) integrierten Rahmen (1) umfasst, wobei die Räder (2) und Griffe (3) am Rahmen (1) befestigt sind, **dadurch gekennzeichnet, dass** sie einen zweiten Teil umfasst, der einen mit Rädern (5) integrierten Lastträger (4) umfasst, wobei die Räder (5) und eine Last (12) fest auf dem Lastträger (4) montiert sind, wobei der zweite Teil gegenüber dem ersten Teil durch die Wirkung eines teleskopischen Hebelarms (10) zum Besteigen einer zweiphasigen Treppenstufe verschiebbar ist, wobei der teleskopische Hebelarm (10) an den Griffen (3) mit einem Gelenk (9) befestigt ist, wobei ein zweites Gelenk (8) den teleskopierbaren Hebelarm (10) mit einem Getriebe (6) verbindet, das wiederum mit einem dritten Gelenk (7) mit dem Lastträger (4) des zweiten Teils verbunden ist.

2. Vorrichtung zum manuellen Anheben einer Last mit einem Hebel für einen Wagen, einen Koffer und dergleichen nach Anspruch 1, **dadurch gekennzeichnet, dass** die Vorrichtung einen Bolzen (13) mit einer Feder (14) umfasst, die die beiden Teile blockiert, so dass sich die Vorrichtung mit ihren vier Rädern (2 und 5) auf einer ebenen Fläche bewegen kann.

3. Verfahren zur Verwendung einer Vorrichtung zum manuellen Anheben einer Last mit einem Hebel nach einem der vorhergehenden Ansprüche, **dadurch gekennzeichnet, dass** es die folgenden zwei Phasen umfasst:
- während der ersten Phase durch Drehen des teleskopischen Hebelarms (10) in einer kreisförmigen Bewegung (F1) aus einer niedrigen Ausgangsposition nach oben, der zweite Teil gleitet relativ zum ersten Teil nach oben und steigt die Treppenstufe hinauf,
- und dann während der zweiten Phase, durch Drehen des teleskopischen Hebelarms (10) in einer kreisförmigen Bewegung (F2) nach unten, bis zur anfänglichen unteren Position des teleskopischen Arms, das erste Teil wiederum den gleichen Schritt ansteigt.

4. Verfahren nach Anspruch 3, **dadurch gekennzeichnet, dass** durch Drehen des teleskopischen Hebelarms (10) nach unten (F2) in die untere Ausgangsposition des Teleskoparms während der zweiten Phase die Räder (5) den zweiten Teil in einer Translationsbewegung (G) bewegen, so dass es dem ersten Teil gelingt, sich einem scheinbaren Winkel am Rand des Schrittes zu nähern, um das Klettern des ersten Teils zu erleichtern.

## Claims

1. Device for manually lifting a load with a lever for a cart, suitcase and the like, facilitating the ascent and descent of stairs and various obstacles, the device comprises a first part comprising a frame (1) integral with wheels (2), the wheels (2) and handles (3) are fixed on the frame (1), **characterized in that** it comprises a second part comprising a load support (4) integral with wheels (5), the wheels (5) and a load (12) are permanently mounted on the load support (4), the second part being displaceable with respect to the first part by the action of a telescopic lever arm (10) for climbing a two-phase staircase step, the telescopic lever arm (10) being fixed on the handles (3) with a joint (9), a second joint (8) connecting the telescopic lever arm (10) with a transmission (6), which in turn is connected with a third joint (7) to the load carrier (4) of the second part.

2. Device for manually lifting a load with a lever for a cart, suitcase and the like according to claim 1, **characterized in that** the device comprises a pin (13) with a spring (14) blocking the two parts, allowing the device to move with its four wheels (2 and 5) on a flat surface.

3. Method of using a device to manually lift a load with a lever according to any of the previous claims, **characterized in that** it comprises the following two phases:
- during the first phase, by turning the telescopic lever arm (10) upwards in a circular movement (F1) from a low initial position, the second part slides relative to the first part upwards and climbs the stair step,
- and then during the second phase, by turning the telescopic lever arm (10) downwards in a circular movement (F2), until the initial lower position of said telescopic arm, the first part in turn rises the same step.

4. Method according to claim 3 **characterized in that** by turning the telescopic lever arm (10) downwards (F2) to the lower initial position of said telescopic arm, during the second phase, the wheels (5) move the second part in a translational movement (G), so that the first part succeeds in approaching an apparent angle on the edge of the step to facilitate the climb of the first part.
